Europäisches Patentamt

European Patent Office

Office européen des brevets

(19)

(11) Veröffentlichungsnummer: **0 376 884**
**A2**

(12) **EUROPÄISCHE PATENTANMELDUNG**

(21) Anmeldenummer: **89810946.7**

(22) Anmeldetag: **12.12.89**

(51) Int. Cl.5: **B01J 2/00**

(30) Priorität: **21.12.88 CH 4715/88**

(43) Veröffentlichungstag der Anmeldung:
**04.07.90 Patentblatt 90/27**

(84) Benannte Vertragsstaaten:
**BE CH DE FR GB IT LI NL SE**

(71) Anmelder: **CIBA-GEIGY AG**
**Klybeckstrasse 141**
**CH-4002 Basel(CH)**

(84) **BE CH FR GB IT LI NL SE**

Anmelder: **CIBA-GEIGY GmbH**
**Oeflinger Strasse 44**
**D-7867 Wehr/Baden(DE)**

(84) **DE**

(72) Erfinder: **Schwab, Heinz, Dr.**
**Drosselweg 21**
**D-7867 Wehr(DE)**
Erfinder: **Fuhrmann, Udo**
**Alemannenweg 3**
**D-7880 Bad Säckingen(DE)**

(54) **Rieselfähiges Granulat.**

(57) Rieselfähiges Granulat, das erhalten wird, indem man in einem Wirbelbett einen feinteiligen anorganischen oder organischen Füllstoff allein oder zusammen mit einer festen Komponente eines härtbaren Gemisches oder einem Teil davon vorlegt, aufwirbelt und dann ein härtbares Gemisch, die übrigen Bestandteile oder den restlichen Teil des härtbaren Gemisches als Einkomponentensystem in Form einer Flüssigkeit oder als Suspension aufdüst, eignet sich vorzugsweise als Press- oder Beschichtungspulver und wird insbesondere für die Beschichtung von elektrischen oder elektronischen Bauteilen eingesetzt.

## Rieselfähiges Granulat

Die vorliegende Erfindung betrifft ein rieselfähiges Granulat bestehend aus einem Agglomerat von feinteiligen anorganischen oder organischen Füllstoffteilchen, welche ein härtbares Gemisch als Einkomponentensystem enthalten, wobei die Mischungskomponenten in homogener Verteilung auf den Füllstoffteilchen vorliegen.

Die Herstellung von rieselfähigen Einkomponentenpulvergemischen oder Einkomponentengranulaten aus härtbaren Epoxidharzgemischen kann in bekannter Weise nach dem Trockenmisch- oder Schmelzmischverfahren vorgenommen werden. Beim Trockenmischverfahren werden die einzelnen Komponenten entweder zunächst getrennt gemahlen und anschliessend, nachdem sie die entsprechende Kornfeinheit besitzen, durch einen Mischvorgang homogenisiert, oder gleich zusammengemischt und während des Mahlprozesses gemeinsam zerkleinert und homogenisiert. In einem auf diese Weise hergestellten Pulvergemisch liegen die einzelnen Komponenten, wie Harz, Härtungsmittel oder Härtungskatalysator, Füllstoff, Farbstoff und andere Additive, als diskrete Partikel vor, so dass diese Mischung als heterogen bezeichnet werden kann. Beim Schmelzmischverfahren werden die im wesentlichen festen Komponenten in einer Mischapparatur, zum Beispiel Henschel-Mischer, trocken vorgemischt und danach aufgeschmolzen, beispielsweise in einem Extruder oder mit Hilfe eines Zweiwalzenwerkes, wobei die festen und nichtschmelzbaren Mischungskomponenten sehr intensiv mit den aufschmelzenden und den in dieser Schmelze gelösten Komponenten der Mischung benetzt werden. Nach dem Abkühlen der Schmelze wird diese gemahlen und gesiebt. Im Einzelkorn dieser Pulverformulierung liegt sowohl im Innern als auch an der Oberfläche eine vollkommen homogene Mischung in der ursprünglich vorgelegten Konzentration vor.

Im EP-Patent 38 292 wird eine rieselfähige, einen hohen Gehalt anorganischer Füllstoffe aufweisende Harzmasse dadurch erhalten, indem man den feinteiligen Füllstoff zusammen mit einem kristallisierten synthetischen Calciumsilikat spezifischer Grösse im flüssigen Harz oder Härtungsmittel suspendiert und verrührt. Die im Beispiel 12 unter Verwendung eines flüssigen, härtbaren Epoxidharzgemisches erhaltene rieselfähige Harzmischung wird in zwei Stufen hergestellt und weist eine Lagerstabilität von nur etwa einem Monat auf.

Es wurde nun gefunden, dass man einen hohen Füllstoffgehalt aufweisende Granulate mit besseren Verarbeitungseigenschaften, insbesondere besserem Fliessverhalten, erhält, wenn man in einem Wirbelbett einen feinteiligen, anorganischen oder organischen Füllstoff aufwirbelt und ein bestimmtes härtbares Gemisch als Einkomponentsystem aufdüst. Ausserdem werden nach dem erfindungsgemässen Verfahren Produkte mit besonders geringem Feinstaubanteil erhalten.

Gegenstand der vorliegenden Erfindung ist somit ein rieselfähiges Granulat bestehend aus einem Agglomerat von feinteiligen anorganischen oder organischen Füllstoffteilchen, welche ein härtbares Gemisch als Einkomponentensystem aufgedüst enthalten, wobei im härtbaren Gemisch mindestens eine Mischungskomponente bei einer Temperatur unterhalb von 150° C flüssig ist und die Mischungskomponenten in homogener Verteilung auf den Füllstoffteilchen vorliegen.

In den erfindungsgemässen Granulaten weisen die Einzelkörper nur an der Oberfläche eine homogene Verteilung der einzelnen Komponenten des Einkomponentensystems auf, das Innere des Einzelkornes vom Agglomerat besteht im wesentlichen aus dem Füllstoff.

Als Füllstoffe können im Prinzip alle Arten von feinteiligen Füllstoffen, wie beispielsweis faserförmige, körnige oder pulverförmige, im Wirbelbett beschichtet werden. Als feinteilige Füllstoffe sind alle solche Füllstoffe geeignet, die im Wirbelbett in den Wirbelzustand gebracht werden können.

Für das erfindungsgemässe Granulat sind als organische Füllstoffe beispielsweise natürliches oder synthetisches polymeres Material, wie Cellulose, vorzugsweise Baumwollfasern oder Holzmehl, gesättigte Polyester, Polyamide oder Melaminharze, geeignet.

Als anorganische Füllstoffe eignet sich beispielsweise Quarzpulver, Glimmer, Talkum, Asbest, Schiefermehl, Kaolin, Wollastonit, Kreidepulver, Dolomit, Magnesiumcarbonat, Gips, Schwerspat, Aluminiumoxid, Bentone, Kieselsäureaerosol, Lithopone, Titandioxid, Russ, Kohlefasern, Graphit, Metallpulver, insbesondere Aluminiumpulver, Metalloxide, Glaspulver, Glaskugeln, Glasfasern, Zinksulfid, Siliciumcarbid, Cristoballit oder eine Mischung von Füllstoffen. Bevorzugt werden für die erfindungsgemässen Granulate anorganische Füllstoffe, insbesondere mineralische Füllstoffe, wie vorzugsweise Quarzpulver, insbesondere Quarzgutmehl, Glimmer, Schiefermehl, Kaolin, Wollastonit, Gips, Schwerspat, Aluminiumoxid, Aluminiumhydroxid, Magnesiumhydroxid, Talk, Kieselsäure oder Bentonite.

Die Füllstoffe können ferner mit Haftvermittlern behandelt sein, die die Bindung des Polymers an die Füllstoffpartikel fördern. Bevorzugt verwendet man ausserdem solche feinteiligen Füllstoffe, die eine hohe Oberflächenaktivität aufweisen, wie beispielsweise die aus dem GB-Patent 1 043 437 bekannten feinteiligen ausgehärteten Melamin-Formaldehyd-Kondensationsprodukte.

Als härtbare Gemische, die in den erfindungsgemässen Gemischen enthalten sind, kommen im allgemeinen solche in Frage, die unter Einwirkung von Licht, Wärme, Härtungsmitteln, Katalysatoren oder Härtungsbeschleunigern während der Verarbeitung zu duroplastischen Endprodukten ausgehärtet werden können. Es handelt sich hierbei im wesentlichen um selbstvernetzbare Kunstharze, die im allgemeinen Vorkondensate, Voraddukte oder ein Gemisch von härtbaren also vernetzbaren Monomeren sind. Dabei soll mindestens eine Komponente im härtbaren Gemisch unterhalb von 150 °C flüssig sein, damit dieses beim Eindüsen in die Wirbelbettkammer als Flüssigkeit oder Emulsion vorliegt. Vorzugsweise ist im härtbaren Gemisch mindestens eine Komponente enthalten, die unterhalb von 50 °C, insbesondere bei Raumtemperatur, flüssig ist. Die flüssige Komponente kann beispielsweise das Harz selbst oder ein Teil davon, das Härtungmittel, der Katalysator oder Beschleuniger sein, sowie auch ein reaktiver Verdünner oder ein Verarbeitungshilfsmittel, wie Fliess- oder Entformungsmittel.

Beispielsweise können folgende selbstvernetzbare Kunststoffe als Einkomponentensystem zur Herstellung der erfindungsgemässen Granulate eingesetzt werden:
Phenolplaste aus Aldehyden und gegebenenfalls alkylierten Phenolen, die im basischen Medium hergestellt werden, Aminoplaste wie z.B. Harnstoffformaldehydharze oder Melaminformaldehydharze, Alkydharze und ölmodifizierte Alkydharze, ungesättigte Polyester, besonders auf der Basis von Maleinsäure, Epoxidharze, besonders auf Bisphenol A-Basis, Polyurethane und ungesättigte Polyimide, besonders auf Basis gegebenenfalls C-alkylierter Bismaleinimide.

Vorzugsweise verwendet man als Einkomponentensystem ein härtbares Epoxidharzgemisch.

Als Epoxidharze kommen vor allem solche mit durchschnittlich mehr als einer an ein Heteroatom (z.B. Schwefel, vorzugsweise Sauerstoff oder Stickstoff) gebundenen Glycidylgruppe, ß-Methylglycidylgruppe oder 2,3-Epoxycyclopentylgruppe in Frage; genannt seien insbesondere Bis-(2,3-epoxycyclopentyl)-ether; Di- bzw. Polyglycidylether von mehrwertigen aliphatischen Alkoholen, wie 1,4-Butandiol, oder Polyalkylenglykolen, wie Polypropylenglykole; Di- oder Polyglycidylether von cycloaliphatischen Polyolen, wie 2,2-Bis-(4-hydroxycyclohexyl)-propan; Di- oder Polyglycidylether von mehrwertigen Phenolen, wie Resorcin, Bis-(p-hydroxyphenyl)-methan, 2,2-Bis-(p-hydroxypheyl)-propan (= Diomethan), 2,2-Bis-(4´-hydroxy-3´,5´-dibromphenyl)-propan, 1,1,2,2-Tetrakis-(p-hydroxyphenyl)-ethan, oder unter sauren Bedingungen erhaltenen Kondensationsprodukten von Phenolen mit Formaldehyd, wie Phenol-Novolake und Kresol-Novolake; Di- bzw. Poly-(ß-methylglycidyl)-ether der oben angeführten mehrwertigen Alkohole oder mehrwertigen Phenole; Polyglycidylester von mehrwertigen Carbonsäuren, wie Phthalsäure, Terephthalsäure, $\Delta^4$-Tetrahydrophthalsäure und Hexahydrophthalsäure; N-Glycidylderivate von Aminen, Amiden und heterocyclischen Stickstoffbasen, wie N,N-Diglycidylanilin, N,N-Diglycidyltoluidin, N,N,N´,N´-Tetraglycidyl-bis-(p-aminophenyl)-methan: Triglycidylisocyanurat; N,N´-Diglycidylethylenharnstoff; N,N´-Diglycidyl-5,5-dimethylhydantoin, N,N´-Diglycidyl-5-isopropyl-hydantoin; N,N´-Diglycidyl-5,5-dimethyl-6-isopropyl-5, 6-dihydrouracil.

Ferner sind auch flüssige oder unter 150 °C aufschmelzbare vorreagierte Addukte solcher Epoxidharze mit Härtern als Epoxidharze geeignet. Vorzugsweise verwendet man flüssige oder unter 50 °C aufschmelzbare, vorreagierte Addukte, insbesondere die bei Raumtemperatur flüssigen vorreagierten Addukte.

Die Kunstharze mit funktionellen Gruppen können auch reaktive Bestandteile eines Kunststoffes sein und mit geeigneten Härtern vernetzt oder mit geeigneten Comonomeren modifiziert werden. Ferner kann es sich bei der flüssigen Reaktionskomponente um Monomere für die Polymerherstellung handeln, z.B. um Polyepoxidverbindungen, Polyisocyanate und ethylenische ungesättigte Verbindungen.

Als Härter für Epoxidharze kommen saure oder basische Verbindungen in Frage. Als geeignete Härter seien z.B. genannt: Amine oder Amide, wie aliphatische, cycloaliphatische oder aromatische, primäre, sekundäre und tertiäre Amine, wie z.B. Monoethanolamin, Ethylendiamin, Hexamethylendiamin, Trimethylhexamethylendiamin, Diethylentriamin, Triethylentetramin, Tetraethylenpentamin, N,N-Dimethylpropylendiamin-1,3, N,N-Diethylpropylendiamin-1,3, 2,2-Bis-(4´-aminocyclohexyl)-propan, 3,5,5-Trimethyl-3-(aminomethyl)-cyclohexylamin ("Isophorondiamin"), Mannichbasen, wie 2,4,6-Tris-(dimethylaminomethyl)-phenol; m-Phenylendiamin, p-Phenylendiamin, Bis-(4-aminophenyl)-methan, Bis-(4-aminophenyl)-sulfon, m-Xylylendiamin; Addukte von Acrylnitril oder Monoepoxiden, wie Ethylenoxid oder Propylenoxid, an Polyalkylenpolyamine, wie Diethylentriamin oder Triethylentetramin; Addukte aus Polyaminen, wie Diethylentriamin oder Triethylentetramin, im Überschuss und Polyepoxiden, wie Diomethanpolyglycidyläthern; Ketimine, z.B. aus Aceton oder Methylketon und Bis-(p-aminophenyl)-methan; Addukte aus Monophenolen oder Polyphenolen und Polyamiden; Polyamide, insbesondere solche aus aliphatischen Polyaminen, wie Diethylentriamin oder Triethylentetramin, und di- oder trimierisierten ungesättigten Fettsäuren, wie dimerisierte Leinölfettsäure (VERSAMID®); polymere Polysulfide (THIOKOL®); Dicyandiamid (1-Cyanoguanidin), Anilin-Formaldehydharze; mehrwertige Phenole, z.B. Resorcin, 2,2-Bis-(4-hydroxyphenyl)-propan oder Phenol-FormaldehydHarze; Bortrifluorid und seine Komplexe mit organischen Verbindungen, wie BF₃-Ether-Komplexe und BF₃-Amin-Komplexe, z.B. BF₃-Monoethylamin-Komplex; Acetoacetanilid-BF₃-Komplex; Phosphorsäure; Triphenylphosphit; mehrbasische Carbonsäuren und ihre Anhydride, z.B. Phthalsäureanhydrid, Δ⁴-Tetrahydrophthalsäureanhydrid, Hexahydrophthalsäureanhydrid, 4-Methylhexahydrophthalsäureanhydrid, 3,6-Endomethylen-Δ⁴-tetrahydrophthalsäureanhydrid, 4-Methyl-3,6-endomethylen-Δ⁴-tetrahydrophthalsäureanhydrid ( = Methylnadicanhydrid), 3,4,5,6,7-Hexachlor-3,6-endomethylen-Δ⁴-tetrahydrophthalsäureanhydrid, Bernsteinsäureanhydrid, Adipinsäureanhydrid, Trimethyladipinsäureanhydrid, Azelainsäureanhydrid, Sebacinsäureanhydrid, Maleinsäureanhydrid, Decenylbernsteinsäureanhydrid; Pyromellitsäuredianhydrid oder Gemische solcher Anhydride.

Als Härtungsbeschleuniger können ebenfalls an sich bekannte Verbindungen verwendet werden. Als Beispiele seien genannt: Komplexe von Aminen, besonders tertiären Aminen, wie Monoethylamin, Trimethylamin und Octyldimethylamin, mit Bortrifluorid oder Bortrichlorid, tertiäre Amine, wie Benzyldimethylamin, Tris-(dimethylaminomethyl)-phenol, Hexamethylentetramin oder 1,6-Bis-(dimethylamino)hexan; Harnstoffderivate, wie N-4-Chlorphenyl-N',N'-dimethylharnstoff (Monuron), N-3-Chlor-4-methylphenyl-N',N'-dimethylharnstoff (Chlortoluron), N-(2-Hydroxyphenyl)-N'-N'-dimethylharnstoff und N-(2-Hydroxy-4-nitrophenyl)-N'-N'-dimethylharnstoff, gegebenenfalls substituierte Imidazole, wie Imidazol, Benzimidazol, 1-Methylimidazol, 3-Methylimidazol, 2-Ethyl-4-methylimidazol, 2-Vinylimidazol, 2-Phenylimidazol, 2-Phenyl-4-methylimidazol, 1-(2,6-Dichlorbenzoyl)-2-phenylimidazol und 1-(2,4,6-Trimethylbenzoyl)-2-phenylimidazol sowie Phosphine.

Geeignete Härter für Polyisocyanate sind z.B. flüssige, verzweigte Polyester, lineare Polyester, Polyacetale, Polyether und Polythioether.

Geeignete Comonomere z.B. für ungesättigte Polyimide sind beispielsweise ethylenisch ungesättigte Verbindungen wie Styrol, Acrylsäureester oder Methacrylsäureester.

Ferner können in den härtbaren Gemischen noch die üblichen Additive enthalten sein, wie beispielsweise Pigmente, Flammschutzmittel, Antioxidatien, optische Aufheller, Weichmacher oder Stabilisatoren gegen licht- oder wärmeinduzierten Abbau.

Die erfindungsgemässen Granulate können hergestellt werden, indem man in einem Wirbelbett einen feinteiligen anorganischen oder organischen Füllstoff allein oder zusammen mit einer festen Komponente eines härtbaren Gemisches oder einem Teil davon vorlegt, aufwirbelt und dann ein härtbares Gemisch, die übrigen Bestandteile oder den restlichen Teil des härtbaren Gemisches als Einkomponentensystem als Flüssigkeit oder als Suspension aufdüst.

Gegenstand vorliegender Erfindung ist somit auch das oben angegebene Verfahren zur Herstellung der erfindungsgemässen Granulate.

Das Aufdüsen des härtbaren Gemisches auf die organischen oder anorganischen Füllstoffe kann in jeder Wirbelbettanlage vorgenommen werden, wie beispielsweise in einem Wirbelschichtgranulator oder Zerstäubungs-Wirbelbettgranulator. Die Arbeitsweise solcher Apparaturen ist bekannt. Wirbelbettanlagen werden beispielsweise zum Trocknen von Lösungen, bei der Rückgewinnung von Feststoffen aus Lösungen, zum Trocknen und Agglomerieren fester Stoffe sowie zum Beschichten von Gegenständen oder festen Partikeln mit anderen Materialien eingesetzt (s. "Anlagen-Technik", CAV Januar 1973).

Die Herstellung der erfindungsgemässen Granulate kann im allgemeinen sowohl bei Raumtemperatur als auch bei erhöhter Temperatur, d.h. bis zu etwa 100˚ C, vorgenommen werden und richtet sich einerseits nach der Reaktivität des härtbaren Gemisches und ist andererseits von der Bedingung abhängig, ab welcher Temperatur unterhalb von 50˚ C mindestens die eine Mischungskomponente flüssig ist. Vorzugsweise führt man das erfindungsgemässe Verfahren im Temperaturbereich von 25 bis 70˚ C durch.

Das erfindungsgemässe Verfahren bietet somit den Vorteil, dass ausser bei Raumtemperatur flüssige Mischungskomponenten auch niedrigschmelzende, d.h. unterhalb von 50˚ C schmelzende Komponenten, für das härtbare Gemisch verwendet werden können.

Die Menge des härtbaren Gemisches, die innerhalb einer bestimmten Zeit in das Wirbelbett eingedüst wird, die sogenannte Eindüsmenge, kann in einem weiten Bereich schwanken und ist unter anderem von der maschinellen Beschaffenheit und von der angewandten Verfahrenstemperatur abhängig. Beispielsweise beträgt bei Pilotansätzen bis etwa 5 kg die Eindüsmenge im allgemeinen zwischen 10 g bis 100 g pro Minute. Bei Produktionsansätzen liegt die Eindüsmenge höher.

Entsprechend den bevorzugt zusammengesetzten erfindungsgemässen Granulaten verwendet man beim erfindungsgemässen Verfahren vorzugsweise anorganische Füllstoffe, insbesondere mineralische Füllstoffe, und setzt man als härtbares Einkomponentensystem vorzugsweise ein härtbares Epoxidharzgemisch ein.

Die erfindungsgemäss hergestellten Granulate weisen den Vorteil auf, dass sie praktisch rein von Verunreinigung sind, da durch deren Herstellung in einem Wirbelbettgranulator ein Abrieb von Metall, Keramik oder anderen Materialien weitgehend vermieden werden kann.

Die erfindungsgemässen Granulate finden vorwiegend als Press-, Imprägnier- und Beschichtungspulver sowie als rieselfähige Klebstoffe Verwendung und werden inbesondere zum Beschichten von elektrischen oder elektronischen Bauteilen eingesetzt. Die erfindungsgemässen Granulate können zu Blockmaterial verpresst werden, d.h., zu Material, das als Formmasse mechanisch verarbeitbar ist.

Beispiel 1:

In einem Wirbelschichtgranulator ("Typ WSG 5" der Fa. Glatt, D-7859 Haltingen) werden 2025 g Quarzmehl (50:50-Mischung aus "W 12" und "M 500" der Fa. Quarz-Werke, D-5020 Frechen) gemeinsam mit 37,5 g Wachs (OP Wachs, Fa. Hoechst AG) vorgelegt und in den Wirbelzustand gebracht. In dieses Wirbelbett wird eine homogene Mischung, bestehend aus 173 g Bisphenol A-diglycidylether mit einem Epoxidäquivalentgewicht von 178 und einer Viskosität von 6500 mPa•s, 263 g Dodecenylbernsteinsäureanhydrid und 2,6 g eines $BCl_3$-N,N-Dimethyl-N-octylaminadduktes als vorgewärmte (T = 30°C) flüssige Reaktionsharzmasse eingedüst. Die durchschnittliche Eindüsmenge beträgt 25 g/min, so dass nach etwa 18 min mit 99 %iger Ausbeute ein trockenes, rieselfähiges Granulat mit folgenden Eigenschaften erhalten wird.
Füllstoffgehalt:78 - 83 Gewichts-%
Gelierzeit bei T = 175°C (gemessen mit der Gelierzeitplatte)150 sec.
Spiral-Fliesslänge bei T = 175°C: ASTM Testmethode D 312/72)1300 mm.

Beispiel 2:

In einem Wirbelschichtgranulator ("Typ WSG 5") werden 2000 g Quarzmehl ("M 500" der Fa. Quarz-Werke) gemeinsam mit 42 g Wachs (OP Wachs der Fa. Hoechst AG) vorgelegt und in den Wirbelzustand gebracht. In dieses Wirbelbett wird eine auf 65°C vorgewärmte flüssige Suspension eingedüst. Diese Suspension wurde vorgemischt aus 836,5 g Bisphenol A-diglycidylether mit einem Epoxidäquivalentgewicht von 178 und einer Viskosität von 6500 mPa•s, 54,5 g Dicyandiamid (1-Cyanoguanidin) und 15,0 g Chlortoluron(3-(3-Chlor-4-methylphenyl)-1,1-dimethylharnstoff). Die durchschnittliche Eindüsmenge beträgt 28 g/min, so dass nach etwa 33 min mit 99% Ausbeute ein trockenes, rieselfähiges Granulat mit folgenden Eigenschaften erhalten wird.
Füllstoffgehalt:68 - 70 Gewichts-%
Gelierzeit bei T = 175°C (gemessen mit der Gelierzeitplatte)110 sec.
Spiral-Fliesslänge bei T = 175°C:ASTM Testmethode D 312/72)1900 mm.

Beispiel 3:

In einem Wirbelschichtgranulator ("Typ WSG 5") werden 2500 g einer Trockenmischung bestehend aus 1617,65 g Schwerspatpulver ("Typ 115" der Fa. Bassermann + Co., D-6800 Mannheim) und 882,35 g eines festen Epoxidharzes auf Basis von Bisphenol A mit einem Epoxidäquivalentgewicht von 740 und einem Erweichungpunkt von T = 90-100°C vorgelegt und in den Wirbelzustand gebracht. In dieses Wirbelbett wird eine auf 43°C vorgewärmte flüssige Suspension eingedüst. Diese Suspension wird vorgemischt aus 381,2 g Bisphenol A-diglycidylether mit einem Epoxidäquivalentgewicht von 178 und einer Viskosität von 6500 mPa•s, 44,1 g Dicyandiamid und 15,9 g Chlortoluron. Die durchschnittliche Eindüsmenge beträgt 45 g/min, so dass nach etwa 10 min mit 97 Ausbeute ein trockenes, rieselfähiges Granulat mit folgenden Eigenschaften erhalten wird.
Füllstoffgehalt:53 - 55 Gewichts-%
Gelierzeit bei T = 175°C(gemessen mit der Gelierzeitplatte)142 sec.

**Ansprüche**

1. Rieselfähiges Granulat bestehend aus einem Agglomerat von feinteiligen anorganischen oder organischen Füllstoffteilchen, welche ein härtbares Gemisch als Einkomponentensystem aufgedüst enthalten, wobei im härtbaren Gemisch mindestens eine Mischungskomponente bei einer Temperatur unterhalb von 150°C flüssig ist und die Mischungskomponenten in homogener Verteilung auf den Füllstoffteilchen vorliegen.

2. Granulat gemäss Anspruch 1 enthaltend als Füllstoff einen anorganischen Füllstoff.

3. Granulat gemäss Anspruch 1 enthaltend als Füllstoff einen mineralischen Füllstoff.

4. Granulat gemäss Anspruch 3 enthaltend als mineralischen Füllstoff Quarzpulver, Glimmer, Schiefermehl, Kaolin, Wollastonit, Gips, Schwerspat, Aluminiumoxid, Aluminiumhydroxid, Magnesiumhydroxid, Talk, Kieselsäure oder Bentonite.

5. Granulat gemäss Anspruch 1 enthaltend als Einkomponentensystem ein zu einem duroplastischen Endprodukt härtbares Gemisch.

6. Granulat gemäss Anspruch 1 enthaltend als Einkomponentensystem ein härtbares Epoxidharzgemisch.

7. Verfahren zur Herstellung eines rieselfähigen Granulats gemäss Anspruch 1, dadurch gekennzeichnet, dass man in einem Wirbelbett einen feinteiligen anorganischen oder organischen Füllstoff allein oder zusammen mit einer festen Komponente eines härtbaren Gemisches oder einem Teil davon vorlegt, aufwirbelt und dann ein härtbares Gemisch, die übrigen Bestandteile oder den restlichen Teil des härtbaren Gemisches als Einkomponentensystem in Form einer Flüssigkeit oder als Suspension aufdüst.

8. Verfahren gemäss Anspruch 7, dadurch gekennzeichnet, dass man als Füllstoff einen anorganischen Füllstoff einsetzt.

9. Verfahren gemäss Anspruch 7, dadurch gekennzeichnet, dass man als härtbares Einkomponentensystem ein härtbares Epoxidharzgemisch einsetzt.

10. Verfahren gemäss Anspruch 7, dadurch gekennzeichnet, dass man einen anorganischen Füllstoff vorlegt und aufwirbelt und dann das härtbare Epoxidharzgemisch als Einkomponentensystem in Form einer Flüssigkeit oder als Suspension aufdüst.

11. Verfahren gemäss Anspruch 7, dadurch gekennzeichnet, dass man den anorganischen Füllstoff zusammen mit einem festen Bestandteil des härtbaren Epoxidharzgemisches vorlegt und aufwirbelt und dann die übrigen Bestandteile des härtbaren Gemisches als Einkomponentensystem in Form einer Flüssigkeit oder als Suspension aufdüst.